(19) Europäisches Patentamt
European Patent Office
Office européen des brevets

(11) **EP 2 423 851 B1**

(12) **FASCICULE DE BREVET EUROPEEN**

(45) Date de publication et mention
de la délivrance du brevet:
**29.08.2018   Bulletin 2018/35**

(51) Int Cl.:
***G06K 9/62*** (2006.01)

(21) Numéro de dépôt: **11179391.5**

(22) Date de dépôt: **30.08.2011**

(54) **Procédé de configuration d'un dispositif  de détection à capteur, programme d'ordinateur et dispositif adaptatif correspondants**

Configuration-Prozess für ein Nachweisverfahren mittels Sensoren und entsprechende Programm und adaptive Verfahren.

Configuration process for a detection method based on sensors, and corresponding program and adaptive method.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **31.08.2010   FR 1056894**

(43) Date de publication de la demande:
**29.02.2012   Bulletin 2012/09**

(73) Titulaire: **Commissariat à l'Énergie Atomique et aux Énergies Alternatives
75015 Paris (FR)**

(72) Inventeur: **Jallon, Pierre
38100 Grenoble (FR)**

(74) Mandataire: **Bonnet, Michel
Cabinet Bonnet
93, rue Réaumur
75002 Paris (FR)**

(56) Documents cités:
**US-A- 5 317 673**

• NATHAN K ET AL: "INITIALIZATION OF HIDDEN MARKOV MODELS FOR UNCONSTRAINED ON-LINE HANDWRITING RECOGNITION", 1996 IEEE INTERNATIONAL CONFERENCE ON ACOUSTICS, SPEECH, AND SIGNAL PROCESSING - PROCEEDINGS. (ICASSP). ATLANTA, MAY 7 - 10, 1996; [IEEE INTERNATIONAL CONFERENCE ON ACOUSTICS, SPEECH, AND SIGNAL PROCESSING - PROCEEDINGS. (ICASSP)], NEW YORK, IEEE, US, vol. CONF. 21, 7 mai 1996 (1996-05-07), pages 3502-3505, XP000681789, DOI: DOI:10.1109/ICASSP.1996.550783 ISBN: 978-0-7803-3193-8
• JALLON P ET AL: "Detection system of motor epileptic seizures through motion analysis with 3D accelerometers", 2009 ANNUAL INTERNATIONAL CONFERENCE OF THE IEEE ENGINEERING IN MEDICINE AND BIOLOGY SOCIETY : EMBC 2009 ; MINNEAPOLIS, MINNESOTA, USA, 3 - 6 SEPTEMBER 2009, IEEE, PISCATAWAY, NJ, USA, 3 septembre 2009 (2009-09-03), pages 2466-2469, XP031639459, ISBN: 978-1-4244-3296-7
• LAWRENCE R RABINER: "A Tutorial on Hidden Markov Models and selected Applications in Speech Recognition", PROCEEDINGS OF THE IEEE, IEEE. NEW YORK, US, vol. 77, no. 2, 1 février 1989 (1989-02-01), pages 257-286, XP002550447, ISSN: 0018-9219, DOI: DOI:10.1109/5.18626

**Description**

La présente invention concerne un procédé de configuration d'un dispositif de détection d'une situation parmi un ensemble de situations dans lesquelles est susceptible de se trouver un système physique observé par au moins un capteur. Elle concerne également un programme d'ordinateur correspondant et un dispositif adaptatif de détection d'une situation dans laquelle se trouve un système physique observé par au moins un capteur.

On entend par « système physique », tout système produisant une sortie physique observable par un capteur, le système étant supposé a priori pouvoir se trouver dans un nombre prédéterminé de situations modélisées par le dispositif de détection.

Le système physique observé peut par exemple être un objet inanimé, tel qu'une structure dont on souhaite surveiller l'état pour détecter d'éventuelles anomalies ou déformations à l'aide d'un ou plusieurs capteurs.

Il peut aussi s'agir d'un système animé, tel qu'une personne ou un animal, par exemple souffrant d'une maladie chronique à situations de crises détectables à l'aide d'un capteur. Selon le ou les capteurs utilisés, les situations détectables sont variables et les applications multiples.

En particulier, une application prometteuse fait l'objet de l'article de P. Jallon et al, intitulé «Détection system of motor epileptic seizures through motion analysis with 3d accelerometers," publié lors de la conférence IEEE EMBC 2009. Dans cet article, un dispositif de détection de crises d'épilepsie utilisant des capteurs de mouvements, notamment des accéléromètres 3D, est basé sur des modèles statistiques de Markov à états cachés, chacun modélisant au mieux, pour une situation donnée, les propriétés statistiques de séquences d'observation fournies par les capteurs telles qu'elles sont attendues pour cette situation. Concrètement, chaque modèle statistique de Markov à états cachés de ce dispositif correspond à une situation possible prédéterminée d'une personne sujette à des crises d'épilepsie parmi, par exemple : une première situation de crise, une seconde situation de crise différent de la première, une situation d'absence de crise. Le principe de la détection consiste alors à sélectionner l'une des situations possibles, par comparaison de probabilités de ces situations, connaissant une séquence d'observation fournie par au moins un accéléromètre, les probabilités étant calculées sur la base de chacun des modèles statistiques de Markov à états cachés du dispositif.

Le problème d'un tel dispositif de détection est qu'il n'est pas adaptatif. Les paramètres des modèles statistiques sont prédéterminés, en particulier enregistrés une bonne fois pour toute dans le dispositif, et doivent pourtant pouvoir rester pertinents lorsque le dispositif de détection est utilisé par des personnes différentes. Bien sûr, chaque personne réagissant différemment en situations de crises d'épilepsie ou en situation d'absence de crise, si le dispositif de détection est performant pour une personne, il ne le sera pas nécessairement pour une autre.

D'une façon plus générale, il est connu de configurer ou reconfigurer un modèle statistique de Markov à états cachés lorsque l'on dispose d'au moins une séquence d'apprentissage considérée comme représentative de la situation supposée modélisée par ce modèle statistique.

Ainsi, l'invention s'applique plus particulièrement à un procédé de configuration comportant les étapes suivantes :

- réception d'une séquence de données d'observation du système physique, appelée séquence d'apprentissage et correspondant à une situation déterminée du système physique,
- détermination, à partir de la séquence d'apprentissage, de paramètres d'un modèle statistique de Markov à états cachés relatif à la situation déterminée, par initialisation préalable de ces paramètres, puis mise à jour de ces paramètres initialisés.

Un tel procédé de configuration est par exemple proposé dans l'article de L. Rabiner, intitulé "A tutorial on Hidden Markov Models and selected applications in speech récognition," Proceedings of the IEEE, vol. 77, no. 2, pp. 257-286, février 1989. Dans cet article, la mise à jour est réalisée par un algorithme itératif espérance-maximisation, en particulier l'algorithme de Baum-Welch. Mais comme tout algorithme d'optimisation par itérations, il est particulièrement sensible à l'initialisation préalable des paramètres à optimiser. En effet, s'il est mal initialisé, le résultat qu'il fournit, bien que stable numériquement, peut s'avérer largement sous optimal, par exemple par convergence vers un maximum local de la fonction de coût qu'il optimise. Au pire, il peut même ne pas converger numériquement et fournir des paramètres aberrants en sortie.

En pratique, les paramètres à initialiser, puis à éventuellement mettre à jour, pour un modèle statistique de Markov à états cachés, sont :

- $C$, le nombre d'états cachés du modèle statistique considéré,
- $\pi_1, ..., \pi_C$, les $C$ probabilités initiales, indépendantes de toute observation, de chaque état caché du modèle statistique considéré,
- $(a_{i,j})_{1 \leq i,j \leq C}$, la matrice des probabilités de transition de chaque état caché $i$ vers chaque autre état caché $j$ du modèle statistique considéré, et

- pour chaque état caché, les paramètres d'une loi de probabilité de l'observation fournie à chaque instant par le capteur, cette observation étant considérée comme une variable aléatoire.

On notera que l'algorithme de Baum-Welch ou tout autre algorithme espérance-maximisation connu ne permet pas de mettre à jour le nombre C d'états cachés, celui-ci étant considéré comme une constante : C doit donc être fixé a priori à l'initialisation et n'est pas mis à jour par l'algorithme.

On notera également que la loi de probabilité de chaque état caché du modèle statistique considéré peut être multidimensionnelle si l'observation est multidimensionnelle, c'est-à-dire si les données fournies par le capteur (ou l'ensemble de capteurs) au dispositif de détection sont multivaluées. Par exemple, si la loi de probabilité est choisie comme étant une loi normale, les paramètres suffisants pour la définir sont son espérance et sa variance, qui peuvent être des scalaires lorsque la loi de probabilité est monodimensionnelle, ou respectivement un vecteur et une matrice lorsque la loi de probabilité est multidimensionnelle.

On notera enfin que la détermination des paramètres du modèle statistique considéré peut se faire indifféremment sur une ou plusieurs séquences d'apprentissage, sachant qu'il est généralement recommandé de prévoir plusieurs séquences pour améliorer statistiquement l'adaptation du modèle statistique considéré à la réalité des séquences d'observation de la situation qu'il est supposé modéliser. Pour une seule séquence d'apprentissage, la fonction de coût à optimiser par mise à jour des paramètres du modèle statistique considéré correspond à la probabilité d'observation de la séquence d'apprentissage selon ce modèle. Pour plusieurs séquences d'apprentissage, la fonction de coût devient le produit des probabilités d'observation des séquences d'apprentissage, toujours selon ce même modèle.

Pour pallier les insuffisances de l'algorithme de mise à jour des paramètres initialisés, une solution bien connue consiste à prévoir plusieurs jeux de paramètres initiaux, à exécuter l'algorithme espérance-maximisation sur chaque jeu de paramètres initiaux et à sélectionner finalement celui qui fournit la meilleure valeur pour la fonction de coût optimisée. Cette solution réduit le risque de se trouver dans un cas défavorable d'exécution de l'algorithme, mais ne résout pas le problème de l'initialisation et alourdit singulièrement le traitement de la séquence d'apprentissage.

D'autres solutions consistent à chercher à améliorer directement l'étape d'initialisation préalable.

Un procédé d'initialisation de modèles de Markov cachés est par exemple décrit dans l'article de K. Nathan et al, intitulé "Initialization of hidden Markov models for unconstrained on-line handwriting récognition", publié lors de la conférence ICASSP, 1996. Dans cet article, chaque état caché d'un modèle de Markov présente plusieurs lois normales sommées dont les paramètres sont obtenus par une classification préalable des observations. Ces lois normales sont communes à tous les états, ces derniers ne se différenciant alors que par des coefficients de pondération. L'initialisation consiste en fait à déterminer ces coefficients de pondération. Mais ce procédé est spécifique à une modélisation très particulière adaptée à la reconnaissance d'écriture. Il n'est pas généralisable à tous les modèles de markov cachés.

Dans l'article de P. Smyth, intitulé "Clustering sequences with hidden markov models", publié dans Advances in Neural Information Processing Systems, 1996, les auteurs groupent les séquences d'apprentissage selon une certaine mesure de similarité. Pour chacun de ces groupes, un modèle est appris et le modèle calculé pour l'initialisation de l'algorithme de Baum Welch est la concaténation de ces différents modèles. L'inconvénient de cette méthode est de multiplier le nombre d'états cachés du modèle final par l'opération de concaténation. Par conséquent, le modèle final sur-décrit les signaux de la séquence d'apprentissage ce qui, en plus d'augmenter la complexité des traitements, peut nuire fortement aux performances du dispositif de détection.

Il peut ainsi être souhaité de prévoir un procédé de configuration qui permette de s'affranchir d'au moins une partie des problèmes et contraintes précités.

L'invention a donc pour objet un procédé de configuration d'un dispositif de détection d'une situation parmi un ensemble de situations dans lesquelles est susceptible de se trouver un système physique observé par au moins un capteur, comportant les étapes suivantes :

- réception d'une séquence de données d'observation du système physique, appelée séquence d'apprentissage, fournie par le capteur et correspondant à une situation déterminée du système physique,
- détermination, à partir de la séquence d'apprentissage, de paramètres d'un modèle statistique de Markov à états cachés enregistré dans des moyens de stockage du dispositif de détection et relatif à la situation déterminée, par initialisation préalable de ces paramètres, puis mise à jour de ces paramètres initialisés,

l'initialisation préalable comportant les étapes suivantes :

- le modèle statistique considéré comportant un nombre donné d'états cachés, détermination d'une pluralité de lois de probabilité à partir de la séquence d'apprentissage, par division de la séquence en sous-séquences et attribution à chaque sous-séquence d'une loi de probabilité la modélisant statistiquement, le nombre de lois de probabilité déterminées étant supérieur au nombre d'états cachés du modèle statistique considéré,
- répartition des lois de probabilité déterminées entre les différents états cachés du modèle statistique considéré,

- détermination, pour chaque état caché du modèle statistique considéré et à partir des lois de probabilités affectées à cet état caché, d'une unique loi de probabilité représentative de cet état caché, et
- initialisation des paramètres du modèle statistique considéré à partir des lois de probabilité représentatives déterminées,

le procédé comportant en outre une étape de configuration du dispositif de détection pour que le modèle statistique considéré intègre les paramètres déterminés par ladite initialisation préalable puis ladite mise à jour.

Ainsi, l'initialisation des paramètres de l'un quelconque des modèles statistiques du dispositif de détection peut être envisagée sur la base d'un autre modèle très fin appliqué à la séquence d'apprentissage, cet autre modèle très fin pouvant présenter un nombre de lois de probabilité bien supérieur au nombre d'états cachés du modèle considéré. La réduction de ce modèle très fin, par répartition de ses lois de probabilité entre les états cachés du modèle considéré, puis détermination sur la base de cette répartition de lois de probabilité représentatives des états cachés, permet d'initialiser finement le modèle considéré, bien qu'il présente un nombre limité d'états cachés. La mise à jour de ses paramètres par des méthodes connues produit alors un résultat globalement optimal. Par conséquent, l'adaptation du dispositif de détection au système physique observé s'en trouve améliorée.

De façon optionnelle, la répartition comporte l'exécution d'un algorithme itératif de K-Moyennes sur un nombre de classes égal au nombre d'états cachés du modèle statistique considéré, cet algorithme itératif comportant, à chaque itération :

- une estimation de distances entre lois de probabilité utilisant la divergence de Kullback Leibler, et
- le calcul, pour chaque classe, d'une loi de probabilité représentant son centre.

De façon optionnelle également, la répartition comporte une initialisation de l'algorithme itératif de K-Moyennes consistant à :

- trier les lois de probabilité par ordre croissant de l'un des paramètres de ces lois,
- répartir les lois de probabilité triées dans les classes dans cet ordre croissant, de la première à la dernière classe,
- pour chaque classe ainsi initialisée, déterminer une loi de probabilité représentant son centre.

De façon optionnelle également, chaque loi de probabilité étant une loi normale, le tri des lois de probabilités lors de l'initialisation de l'algorithme itératif de K-Moyennes comporte le tri d'une composante d'espérance de ces lois normales.

De façon optionnelle également, chaque loi de probabilité étant une loi normale, la loi de probabilité représentant le centre d'une classe Ki est une loi normale déterminée par le calcul de son espérance $\mu_i$ et de sa variance $\Sigma_i$ en fonction des espérances $\mu_{i,j}$ et des variances $\Sigma_{i,j}$ de toutes les lois de probabilité de cette classe Ki, de la façon suivante :

$$\mu_i = \frac{1}{Card(Ki)} \sum_{j \in Ki} \mu_{i,j} \quad \text{et} \quad \Sigma_i = \frac{1}{Card(Ki)} \sum_{j \in Ki} \left( \Sigma_{i,j} + \mu_{i,j}^H \mu_{i,j} \right) - \mu_i^H \mu_i \ ,$$

où Card est la fonction « Cardinal » et H est l'opérateur Hermitien.

De façon optionnelle également, la mise à jour des paramètres du modèle statistique considéré comporte l'exécution de l'algorithme de Baum-Welch sur la séquence d'apprentissage.

De façon optionnelle également, l'initialisation préalable des paramètres du modèle statistique considéré comporte en outre :

- l'initialisation des probabilités initiales de chaque état caché à une valeur commune d'équiprobabilité, et
- l'initialisation de la matrice des transitions de chaque état caché à chaque autre à une matrice dont les coefficients diagonaux sont égaux à une première valeur proche de 1, notamment comprise entre 0,8 et 1, et dont les autres coefficients sont égaux à une seconde valeur proche de 0, notamment comprise entre 0 et 0,2.

L'invention a également pour objet un programme d'ordinateur téléchargeable depuis un réseau de communication et/ou enregistré sur un support lisible par ordinateur et/ou exécutable par un processeur, comprenant des instructions pour l'exécution des étapes d'un procédé de configuration tel que défini précédemment, lorsque ledit programme est exécuté sur un ordinateur.

L'invention a également pour objet un dispositif adaptatif de détection d'une situation parmi un ensemble de situations dans lesquelles est susceptible de se trouver un système physique observé par au moins un capteur, à partir de données d'observation du système physique fournies par le capteur, comportant :

- au moins un capteur pour la fourniture d'une séquence de données d'observation du système physique,
- des moyens de stockage, pour chaque situation de l'ensemble de situations, d'un modèle statistique de Markov à états cachés,
- un calculateur, relié au capteur et aux moyens de stockage, programmé pour sélectionner l'une des situations par comparaison de probabilités de ces situations connaissant la séquence de données d'observation, les probabilités étant estimées sur la base des modèles statistiques stockés,

dans lequel le calculateur est en outre programmé pour exécuter les étapes d'un procédé de configuration tel que défini précédemment, sur réception d'une séquence identifiée comme séquence d'apprentissage correspondant à une situation déterminée du système physique.

De façon optionnelle, le capteur comporte au moins l'un des éléments de l'ensemble constitué d'un capteur de mouvement à au moins un axe de mesure, d'un capteur de pression, d'un cardiomètre et d'un capteur de glycémie.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif de détection selon un mode de réalisation de l'invention,
- la figure 2 illustre une utilisation particulière du dispositif de détection de la figure 1,
- la figure 3 illustre les étapes successives d'un procédé de configuration, par exemple du dispositif de la figure 1, selon un mode de réalisation de l'invention, et
- les figures 4A à 4D illustrent, à l'aide de diagrammes, les résultats intermédiaires d'une étape de répartition du procédé de configuration de la figure 3.

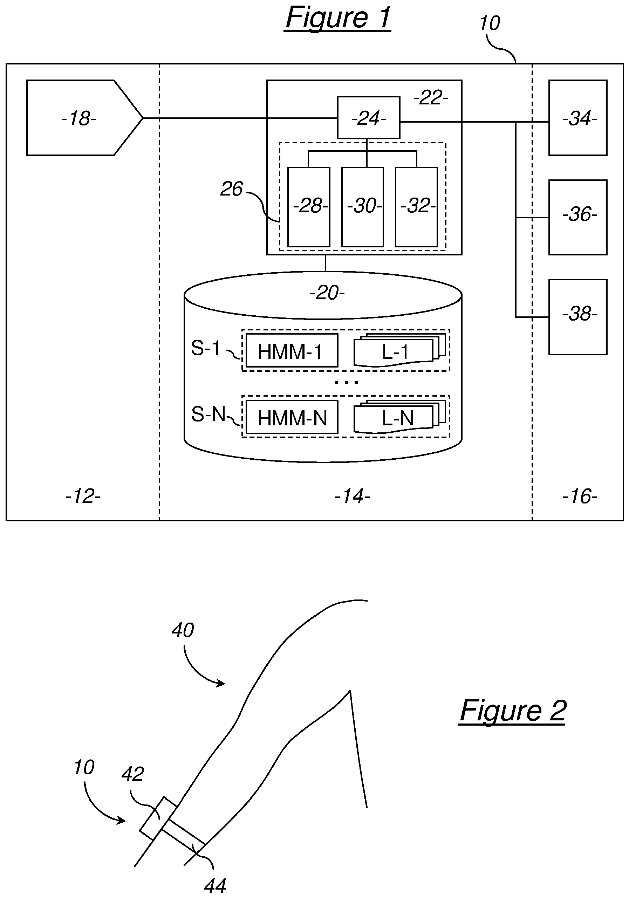

Le dispositif 10 représenté sur la figure 1 est un dispositif adaptatif de détection d'une situation parmi un ensemble de situations dans lesquelles est susceptible de se trouver un système physique observé par au moins un capteur. Il comporte à cet effet un module d'observation 12, un module de traitement 14 et un module d'interface 16.

Le module d'observation 12 comporte un ou plusieurs capteurs représentés par l'unique référence 18 pour l'observation du système physique.

De façon non limitative, quelques exemples de capteurs et de situations observables à l'aide de ces capteurs sont donnés :

- le capteur 18 peut par exemple comporter un capteur de mouvements à un, deux ou trois axes de mesure, notamment un accéléromètre 3D porté par une personne, pour la détermination d'une situation de crise ou d'absence de crise d'épilepsie de la personne,
- plus généralement, il peut comporter un capteur de mouvements pour la détermination de l'activité d'un système mobile dans un ensemble d'activités prédéterminées,
- il peut comporter un cardiomètre pour la détermination d'une activité d'une personne,
- il peut comporter un capteur de glycémie d'une personne ou d'un animal souffrant de diabète pour la détermination d'une situation de crise ou d'absence de crise,
- il peut comporter un capteur de pression pour déterminer la situation de fonctionnement (normal, limite, anormal) d'une installation sous pression,
- etc.

Le capteur 18 peut aussi comporter plusieurs capteurs fournissant chacun des observations qui, combinées, permettent d'envisager de détecter des situations plus complexes.

Il effectue des mesures sur le système physique pour fournir au moins un signal d'observation, transmis sous la forme de séquences de données d'observation au module de traitement 14. Les données d'observation peuvent être directement issues d'un échantillonnage du signal d'observation ou obtenues après un ou plusieurs traitements, notamment un ou plusieurs filtrages, de ce signal. On comprend ainsi que les données d'observation peuvent être mono ou multivaluées, y compris lorsque l'on ne dispose que d'un seul capteur 18.

Le module de traitement 14 est un circuit électronique, par exemple celui d'un ordinateur. Il comporte des moyens de stockage 20, par exemple une mémoire de type RAM, ROM ou autre, dans lesquels sont stockés les paramètres de modèles statistiques de Markov à état cachés.

Chaque situation S-1, ..., S-N prévue pour être détectable par le dispositif de détection 10 à l'aide du capteur 18 est modélisée par un modèle statistique de Markov à état cachés correspondant noté HMM-1, ..., HMM-N.

L'un quelconque des modèles statistiques de Markov à état cachés stockés, noté HMM-n et modélisant la situation E-n, est défini par les paramètres suivants :

- Cn, le nombre d'états cachés de ce modèle HMM-n,
- $\pi_1, ..., \pi_{Cn}$, les Cn probabilités initiales, indépendantes de toute observation, de chaque état caché de ce modèle HMM-n,
- $(a_{i,j})_{1\leq i,j\leq Cn}$, la matrice des probabilités de transition de chaque état caché i vers chaque autre état caché j de ce modèle HMM-n, et
- pour chaque état caché, les paramètres d'une loi de probabilité de l'observation fournie à chaque instant par le capteur.

A titre d'exemple non limitatif et pour simplifier les notations, la loi de probabilité de chaque état caché i du modèle HMM-n peut être choisie dans la famille des lois normales. Dans ce cas, elle est définie par son espérance $\mu n_i$ et sa variance $\sum n_i$ Lorsque les données fournies par le capteur 18 sont multivaluées, $\mu n_i$ est un vecteur comportant autant de composantes et $\sum n_i$ une matrice comportant autant de lignes et de colonnes que de valeurs fournies à chaque instant.

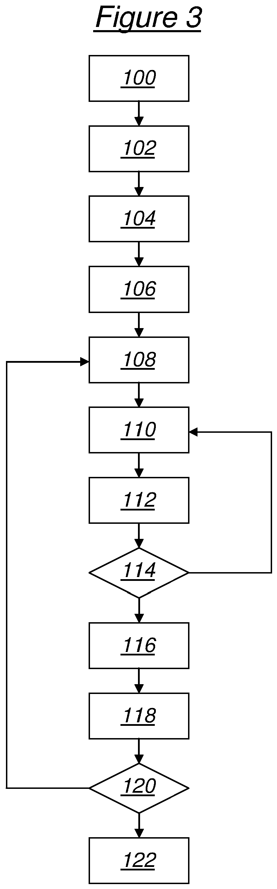

La mémoire 20 peut en outre stocker, en association avec chaque modèle HMM-n, une ou plusieurs séquences d'apprentissage L-n. Chaque séquence d'apprentissage du modèle HMM-n est en fait une séquence d'observation fournie par le capteur 18, mais dont il est connu a priori qu'elle a été extraite de l'observation du système physique alors qu'il était dans la situation S-n. Elle peut donc être traitée dès réception par le module de traitement 14, ou bien stockée en mémoire 20 en relation avec le modèle HMM-n en vue d'un traitement ultérieur, pour une configuration ou reconfiguration du dispositif de détection 10 par mise à jour de paramètres du modèle HMM-n, comme cela sera détaillé en référence à la figure 3.

Le module de traitement 14 comporte en outre un calculateur 22, par exemple une unité centrale d'ordinateur munie d'un microprocesseur 24 et d'un espace de stockage d'au moins un programme d'ordinateur 26. Ce calculateur 22, et plus particulièrement le microprocesseur 24, est relié au capteur 18 et à la mémoire 20.

Le programme d'ordinateur 26 remplit trois principales fonctions illustrées par des modules 28, 30 et 32 sur la figure 1.

La première fonction, remplie par le module de détection 28, par exemple sous la forme d'une boucle d'instructions, est une fonction de détection d'une situation dans laquelle se trouve le système physique, sur réception d'une séquence d'observation fournie par le capteur 18. Plus précisément, le module de détection 28 est programmé pour sélectionner l'une des situations S-1, ..., S-N par comparaison de probabilités de ces situations connaissant la séquence d'observation, les probabilités étant estimées sur la base des modèles statistiques stockés HMM-1, ..., HMM-N. La résolution de cette sélection à l'aide de modèles statistiques de Markov à états cachés est bien connue et fait partie des trois grandes classes de problèmes résolus par les modèles de Markov cachés, telles que mentionnées dans l'article de L. Rabiner précité. La méthode employée ne sera donc pas détaillée.

La deuxième fonction, remplie par le module d'enregistrement 30, par exemple sous la forme d'une boucle d'instructions, est une fonction d'enregistrement, dans la mémoire 20, d'une séquence d'observation en relation avec l'une des situations S-1, ..., S-N. Cette séquence d'observation devient alors une séquence d'apprentissage à utiliser pour configurer ou reconfigurer le dispositif de détection 10.

La troisième fonction, remplie par le module de configuration 32, par exemple sous la forme d'une boucle d'instructions, est une fonction de configuration du dispositif de détection 10 par mise à jour des paramètres d'au moins un modèle statistique HMM-n stocké en mémoire 20 à l'aide d'une séquence d'apprentissage ou d'un ensemble de séquences d'apprentissage correspondant L-n. Cette fonction sera détaillée en référence à la figure 3.

Pour sélectionner quelle fonction le module de traitement 14 doit remplir, le module d'interface 16 peut comporter un sélecteur de mode 34 commandé par un utilisateur, notamment la personne portant le dispositif de détection 10 elle-même, lorsque le système physique observé est une personne.

Dans un mode de réalisation simple, il peut être considéré que le dispositif de détection 10 fonctionne par défaut en mode de détection, exécutant ainsi le module de détection 28. L'un des intérêts du dispositif de détection 10 étant de détecter au moins une situation critique parmi un ensemble de situations possibles, telle que par exemple une crise d'épilepsie chez un porteur du dispositif sujet à ce type de situation, le module d'interface 16 peut en outre comporter un déclencheur d'alerte 36. Ce déclencheur peut par exemple comporter un écran, pour l'affichage d'un message d'avertissement, un haut-parleur, pour l'émission d'un signal sonore, ou un émetteur, pour la transmission d'un signal vers une alarme distante.

Sur commande de l'utilisateur via le sélecteur de mode 34, le dispositif de détection 10 peut momentanément passer en mode d'enregistrement, lorsqu'une séquence d'observation associée à une situation connue du système physique observé est fournie par le capteur 18 et doit être enregistrée comme séquence d'apprentissage dans la mémoire 20. Le dispositif de détection peut alors comporter une interface d'enregistrement 38, à l'aide de laquelle l'utilisateur définit la séquence d'observation (par exemple en marquant son début et sa fin) et l'associe à l'une des situations possibles. L'interface d'enregistrement 38 peut comporter, de façon classique, un écran et/ou des moyens de saisie.

Sur commande de l'utilisateur via le sélecteur de mode 34 également, le dispositif de détection 10 peut momentanément passer en mode de configuration, lorsque l'utilisateur estime disposer de suffisamment de séquences d'apprentissage en mémoire 20 pour améliorer l'adaptation du dispositif de détection 10 au système physique observé.

On notera que les modules d'observation 12, de traitement 14 et d'interface 16 sont structurellement séparables. Ainsi le dispositif de détection 10 peut être conçu d'un seul tenant ou en plusieurs éléments matériels distincts reliés entre eux par des moyens de transmission de données avec ou sans fil. En particulier, les modules de traitement 14 et éventuellement d'interface 16 peuvent être mis en oeuvre par ordinateur. Seul le module d'observation 12 est nécessairement au voisinage voire au contact du système physique observé puisqu'il comporte le ou les capteurs.

Sur la figure 2, un mode de réalisation particulièrement compact est illustré, pour une application de surveillance d'une personne 40. Selon ce mode de réalisation, le dispositif de détection 10 est tout entier intégré dans un boîtier 42 porté par la personne. Le capteur est par exemple un accéléromètre 3D et les situations observés sont par exemple au nombre de deux : une situation de crise d'épilepsie modélisée par un modèle statistique HMM-1 et une situation d'absence de crise d'épilepsie modélisée par un modèle statistique HMM-2. Pour cette application, le boîtier 42 est par exemple fermement maintenu à un bras de la personne 40 au moyen d'un bracelet 44, de sorte que le dispositif de détection 10 est porté tel une montre.

Le fonctionnement du module de configuration 32 va maintenant être détaillé en référence à la figure 3 sur l'exemple d'une configuration du dispositif de détection 10 par mise à jour des paramètres de l'un quelconque (HMM-n) des modèles statistiques stockés dans la mémoire 20. L'exécution du module de configuration 32 par le microprocesseur 24 produit la séquence d'étapes illustrées sur cette figure.

Au cours d'une première étape 100, dans une plage de valeurs possibles du nombre d'états cachés que peut présenter ce modèle HMM-n, ce nombre est fixé à Cn. Une plage de valeurs possibles est par exemple [3 ;10]. Pour première valeur, Cn peut prendre la première valeur de cette plage.

Au cours d'une étape 102, un ensemble L-n de séquences d'apprentissage relatives à la situation S-n modélisée par le modèle statistique de Markov à états cachés HMM-n est reçu par le microprocesseur 24 pour son traitement par le module de configuration 32. Il peut être reçu directement du capteur 18, mais plus couramment, il est extrait de la mémoire 20 dans laquelle les séquences d'apprentissage peuvent avoir été enregistrées à des moments très différents, notamment lors de différentes occurrences de la situation S-n. Concrètement, pour une application de détection de crises d'épilepsie, sachant que les séquences d'observation transmises par le capteur 18 peuvent être traitées par le module de détection 28 dans des fenêtres glissantes d'observation de, par exemple, 45 secondes, à raison de 25 échantillons par seconde, chaque séquence d'apprentissage peut, elle, représenter plusieurs minutes d'observation. Ainsi, au total, un ensemble de séquences d'apprentissage peut durer plusieurs dizaines de minutes, voire une heure ou plus.

Lors des étapes 104 et 106 suivantes, une pluralité de lois de probabilité est déterminée à partir de la séquence d'apprentissage, le nombre Ln de lois de probabilité déterminées étant supérieur à, voire très grand devant, Cn.

Plus précisément, au cours de l'étape 104, le nombre Ln de lois de probabilités à déterminer peut être optionnellement obtenu en divisant l'ensemble des séquences d'apprentissage en sous-séquences d'une seconde chacune. Dans l'exemple précité, cela donne des sous-séquences de 25 échantillons. En effet, d'une façon générale, une sous-séquence de 25 données mono ou multivaluées peut suffire pour déterminer une loi de probabilité, notamment une loi normale, modélisant statistiquement correctement cette sous-séquence. La division de la séquence d'apprentissage en sous-séquences peut par ailleurs se faire avec ou sans recouvrements entre sous-séquences successives.

Ainsi, au cours de l'étape 106, à chaque sous-séquence est associée une loi de probabilité lui correspondant, par exemple une loi normale de paramètres $\mu n_l$ (espérance) et $\Sigma n_l$ (variance). A ce stade du procédé, la détermination des Ln lois et donc de leurs paramètres $\mu n_l$ et $\Sigma n_l$ est simple : il suffit de calculer la moyenne et la variance de chaque sous-séquence, considérées comme des estimateurs de $\mu n_l$ et $\Sigma n_l$.

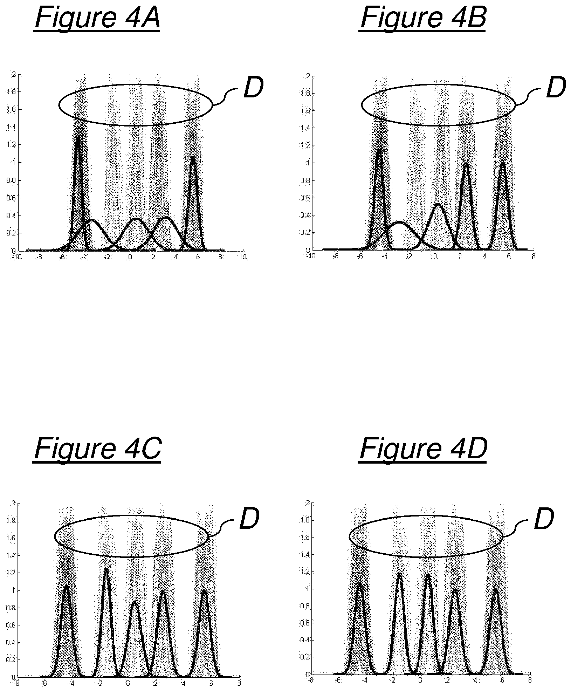

Lors de cette même étape, les Ln lois de probabilité sont triées par exemple par ordre croissant de la première composante des paramètres d'espérance $\mu n_l$. Dans le cas particulier de séquences d'apprentissage monodimensionnelles, le tri se fait donc par ordre croissant des espérances. Cela donne par exemple une distribution D telle que celle illustrée sur les figures 4A à 4D.

Au cours de l'étape 108 suivante, une répartition initiale des lois de probabilité déterminées est réalisée entre les Cn états cachés du modèle statistique HMM-n. Cette répartition se fait sur la base du tri précédent. Par exemple, si Ln est un multiple de Cn, c'est-à-dire si $\exists k / Ln = k.Cn$, on peut attribuer les k premières lois de probabilité à un premier état caché, les k suivantes à un deuxième et ainsi de suite jusqu'au dernier état caché. Si Ln n'est pas un multiple de Cn, la répartition peut se faire sur la même base, par exemple en ignorant les dernières sous-séquences. Cette étape correspond à une classification initiale des Ln lois de probabilité en Cn classes par équirépartition, chaque classe correspondant à un état caché.

Au cours de l'étape 110 suivante, pour chaque classe Ki ($1 \leq i \leq Cn$) et sur la base d'un calcul de moyenne des lois de probabilités affectées à cette classe Ki, on détermine une loi de probabilité représentant son centre. Soit Y une variable aléatoire suivant la loi de ce centre. Si ce centre doit représenter la moyenne des lois de probabilités de la classe Ki, alors on peut écrire : $Y = \sum_{l \in Ki} 1(X = l) Z_l$ , où $Z_l$ est une variable aléatoire qui suit la loi normale d'indice I et de paramètres $\mu n_{i,l}$ et $\Sigma n_{i,l}$ de la classe Ki, et où X est une variable aléatoire qui vaut I si Y suit la même loi de probabilité que $Z_l$.

La loi du centre de la classe Ki est une somme de lois normales qu'il est possible d'estimer, mais qu'il est aussi possible d'approcher simplement à l'aide d'une loi normale de paramètres $\mu n_i$ et $\Sigma n_i$. Il vient alors :

$$\mu n_i = E_{X,Z}(Y) = E_{X,Z}\left(\sum_{l \in Ki} 1(X = l) Z_l\right) = \sum_{l \in Ki} E_{X,Z}(1(X = l)) E_{X,Z}(Z_l) \text{, d'où}$$

$$\mu n_i = \frac{1}{Card(Ki)} \sum_{l \in Ki} \mu n_{i,l} \text{ , où Card est la fonction « Cardinal »} \tag{1}$$

et

$$\Sigma n_i = E_{X,Z}\left((Y - E_{X,Z}(Y))^H (Y - E_{X,Z}(Y))\right) = E_{X,Z}(Y^H Y) - E_{X,Z}(Y)^H E_{X,Z}(Y),$$

$$\Sigma n_i = E_{X,Z}\left(\left(\sum_{l \in Ki} 1(X = l) Z_l\right)^H \left(\sum_{m \in Ki} 1(X = m) Z_m\right)\right) - \mu n_i^H \mu n_i,$$

$$\Sigma n_i = \sum_{l,m \in Ki} E_{X,Z}(1(X = l)1(X = m)Z_l Zm) - \mu n_i^H \mu n_i,$$

$$\Sigma n_i = \frac{1}{Card(Ki)} \sum_{l \in Ki} E_{X,Z}(Z_l^H Z_l) - \mu n_i^H \mu n_i \text{, d'où}$$

$$\Sigma n_i = \frac{1}{Card(Ki)} \sum_{l \in Ki} \left(\Sigma n_{i,l} + \mu n_{i,l}^H \mu n_{i,l}\right) - \mu n_i^H \mu n_i, \tag{2}$$

où H est l'opérateur hermitien.

Les équations (1) et (2) montrent que, tel que le centre d'une classe Ki quelconque est défini, il est possible de calculer simplement ses paramètres de loi normale $\mu n_i$ et $\Sigma n_i$ à partir des paramètres $\mu n_{i,l}$ et $\Sigma n_{i,l}$ des lois normales de la classe Ki.

Au cours d'une étape 112 suivante, sur la base des Cn centres déterminés à l'étape précédente, une nouvelle répartition des Ln lois de probabilité déterminées à l'étape 106 est réalisée en utilisant une fonction de «distance» entre lois de probabilité normales. Plus précisément, pour chaque loi de probabilité déterminée à l'étape 106, on calcule sa « distance » par rapport à chacun des centres et on lui affecte la classe Ki du centre le plus proche.

Pour cela, on définit une fonction de « distance » entre lois normales sur la base de la divergence de Kullback Leibler. Cette divergence n'étant pas commutative, ce n'est pas rigoureusement une distance, mais elle constitue tout de même un modèle exploitable pour cette étape de classification. On rappelle que la divergence de Kullback Leibler s'écrit, pour deux lois de probabilités p et q :

$$D_{KL}(p\|q) = \int \log\left(\frac{p(u)}{q(u)}\right) p(u) du \text{ .}$$

Pour des lois normales $pn_l$ et $pn_k$ de paramètres respectifs $\mu n_l$, $\Sigma n_l$ et $\mu n_k$, $\Sigma n_k$, elle prend la forme suivante :

$$D_{KL}\left(pn_l \| pn_k\right) = \frac{1}{2}\left( \log\left(\frac{|\Sigma n_k|}{|\Sigma n_l|}\right) + Tr\left(\Sigma n_k^{-1} \Sigma n_l\right) + \left(\mu n_l - \mu n_k\right)^H \Sigma n_k^{-1}\left(\mu n_l - \mu n_k\right) - N \right),$$

où $|\Sigma|$ est la valeur absolue du déterminant de la matrice $\Sigma$, Tr la fonction Trace et N le nombre de composantes du vecteur $\mu n_l$ ou $\mu n_k$.

Suite aux étapes 110 et 112, on passe à une étape 114 lors de laquelle on teste un critère d'arrêt comportant au moins l'une des deux conditions suivantes :

- la nouvelle répartition, obtenue à l'issue de l'étape 112, des Ln lois de probabilité déterminées à l'étape 106 est inchangée par rapport à la répartition précédente (i.e. répartition initiale de l'étape 108 ou répartition obtenue à une exécution précédente de l'étape 112),
- les étapes 110 et 112 ont été répétées un nombre Nmax de fois, Nmax étant une constante prédéterminée.

Si le critère d'arrêt n'est pas vérifié, le module de configuration 32 revient à l'étape 110 pour une nouvelle exécution des étapes 110 et 112. Sinon, il passe à une étape 116 d'initialisation des paramètres du modèle statistique HMM-n à l'aide du résultat de la boucle d'étapes 110 à 114.

Il convient de remarquer que la boucle d'étapes 110 à 114 constitue une implémentation de l'algorithme des K-Moyennes pour la classification automatique non supervisée des Ln lois normales dans Cn classes correspondant aux Cn états cachés du modèle HMM-n. Le résultat de cette application de l'algorithme des K-Moyennes aux Ln lois de probabilité déterminées à l'étape 106 est une répartition optimisée de ces lois de probabilité entre les Cn états cachés du modèle statistique HMM-n. En outre, chaque centre de paramètres $\mu n_i$ et $\Sigma n_i$ calculé à la dernière exécution de l'étape 110 constitue une unique loi de probabilité représentative de la classe (i.e. l'état caché) dont il est le centre.

L'initialisation 116 des paramètres du modèle statistique HMM-n se fait, sur la base du résultat précité, de la façon suivante :

- le nombre d'états cachés du modèle HMM-n initialisé est fixé à la valeur Cn,
- les Cn probabilités initiales $\pi_1$, ..., $\pi_{Cn}$ du modèle HMM-n sont initialisées à une valeur commune d'équiprobabilité de 1/Cn,
- la matrice des probabilités de transition $(a_{i,j})_{1\le i,j,\le Cn}$ du modèle HMM-n est initialisée à une matrice dont les coefficients diagonaux sont égaux à une première valeur proche de 1, notamment comprise entre 0,8 et 1, et dont les autres coefficients sont égaux à une seconde valeur proche de 0, notamment comprise entre 0 et 0,2, et
- les paramètres de la loi de probabilité de l'observation fournie à chaque instant par le capteur 18 pour l'état caché Ki sont initialisés à ceux, $\mu n_i$ et $\Sigma n_i$, du centre, calculé à la dernière exécution de l'étape 110, de cet état caché.

Suite à cette étape d'initialisation 116, on passe à une étape 118 de mise à jour, à partir de l'ensemble des séquences d'apprentissage, des paramètres initialisés du modèle HMM-n. Cette mise à jour est réalisée, comme indiqué précédemment, par l'exécution d'un algorithme itératif espérance-maximisation, en particulier l'algorithme de Baum-Welch, sur l'ensemble des séquences d'apprentissage. Compte tenu de la pertinence de l'initialisation décrite précédemment, cette étape fournit des paramètres du modèle HMM-n globalement optimaux au vu de l'ensemble des séquences d'apprentissage, pour un nombre donné Cn d'états cachés.

Au cours de l'étape 120 suivante, un test est réalisé pour savoir si la succession d'étapes 108 à 118 doit être de nouveau exécutée pour une nouvelle valeur de Cn. Cn est par exemple incrémenté d'une unité et s'il reste dans la plage de valeurs possibles précitée, on reprend le procédé à l'étape 108. Sinon on passe à une dernière étape 122 de configuration du dispositif de détection 10 pour que le modèle statistique HMM-n intègre les paramètres finalement déterminés.

Plus précisément, au cours de cette étape dernière étape 122, plusieurs jeux de paramètres sont en concurrence, correspondant à plusieurs valeurs de Cn. Il s'agit alors d'en sélectionner un. Le module de configuration 32 peut par exemple retenir celui qui donne la meilleure valeur de la fonction de coût utilisée à l'exécution 118 de l'algorithme de Baum-Welch. Puis ce jeux de paramètres finalement déterminé pour le modèle statistique HMM-n est enregistré dans la mémoire 20.

La figure 4A illustre, à l'aide d'un diagramme, le résultat de l'étape 108 et de la première exécution de l'étape 110 sur un ensemble de Ln lois normales, conformes à ce qui pourrait être réellement obtenu d'une séquence d'apprentissage de situation de crise d'épilepsie, préalablement triées pour Cn = 5. Les cinq centres des cinq classes, dans lesquelles les Ln lois normales sont équiréparties, sont représentés en traits épais.

Les figures 4B, 4C et 4D illustrent respectivement ce que deviennent ces cinq centres après des première, deuxième et troisième itérations de la boucle d'étapes 112-114-110. En admettant que la figure 4D illustre le résultat exploité à l'étape 116, on note que les cinq centres finalement obtenus sont très représentatifs de l'ensemble Ln des lois de probabilité extraites de l'ensemble des séquences d'apprentissage. Ils sont en tout cas nettement plus représentatifs des Ln lois de probabilité que les cinq centres initiaux de la figure 4A.

Au vu de la distribution D des Ln lois normales fournies en exemple, on imagine également aisément que c'est cette valeur 5 de Cn qui fournira certainement le meilleur résultat à l'étape 118 et sera retenue à l'étape 122.

Il apparaît clairement qu'un dispositif de détection tel que celui décrit précédemment permet des reconfigurations précises et aussi fréquentes que souhaitées par son utilisateur. Il est ainsi aisé d'adapter le dispositif de détection au système physique observé, et même aux évolutions dans le temps de ce système physique, puisque les modèles statistiques de Markov à états cachés sur la base desquels il réalise sa détection ne sont pas figés.

On notera par ailleurs que l'invention n'est pas limitée au mode de réalisation décrit précédemment.

Notamment, le dispositif de détection peut être conçu sous des formes très diverses puisque ses modules d'observation 12, de traitement 14 et d'interface 16 sont séparables. Sa conception peut ainsi s'adapter à l'application envisagée et au système physique observé.

Par ailleurs, il peut être envisagé un autre algorithme que celui de Baum Welch, équivalent en termes d'optimisation de paramètres d'un modèle statistique de Markov à états cachés, pour exécuter l'étape 118, un autre algorithme que celui des K-Moyennes, équivalent en termes de classification non supervisée à nombre de classes connu a priori, pour exécuter les étapes 108 à 114, et d'autres métriques ou méthodes de calcul de centres, pour exécuter les étapes 110 et 112.

Il apparaîtra plus généralement à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé de configuration d'un dispositif (10) de détection d'une situation parmi un ensemble de situations (S-1, ..., S-N) dans lesquelles est susceptible de se trouver un système physique (40) observé par au moins un capteur (18), comportant les étapes suivantes :

   - réception (102) d'une séquence de données d'observation du système physique, appelée séquence d'apprentissage (L-1, ..., L-N), fournie par le capteur et correspondant à une situation déterminée du système physique,
   - détermination, à partir de la séquence d'apprentissage, de paramètres d'un modèle statistique de Markov à états cachés (HMM-1, ..., HMM-N) enregistré dans des moyens (20) de stockage du dispositif de détection et relatif à la situation déterminée, par initialisation préalable (104-116) de ces paramètres, puis mise à jour (118) de ces paramètres initialisés,

   **caractérisé en ce que** l'initialisation préalable (104-116) comporte les étapes suivantes :

   - le modèle statistique considéré comportant un nombre donné d'états cachés, détermination (104, 106) d'une pluralité de lois de probabilité à partir de la séquence d'apprentissage, par division de la séquence en sous-séquences et attribution à chaque sous-séquence d'une loi de probabilité la modélisant statistiquement, le nombre de lois de probabilité déterminées étant supérieur au nombre d'états cachés du modèle statistique considéré,
   - répartition (106-114) des lois de probabilité déterminées entre les différents états cachés du modèle statistique considéré,
   - détermination (110), pour chaque état caché du modèle statistique considéré et à partir des lois de probabilités affectées à cet état caché, d'une unique loi de probabilité représentative de cet état caché, et
   - initialisation (116) des paramètres du modèle statistique considéré à partir des lois de probabilité représentatives déterminées,

   et **en ce que** le procédé comporte en outre une étape de configuration (122) du dispositif de détection pour que le modèle statistique considéré intègre les paramètres déterminés par ladite initialisation préalable (104-116) puis ladite mise à jour (118).

**2.** Procédé de configuration selon la revendication 1, dans lequel la répartition (106-114) comporte l'exécution (110-114) d'un algorithme itératif de K-Moyennes sur un nombre de classes égal au nombre d'états cachés du modèle statistique considéré (HMM-1, ..., HMM-N), cet algorithme itératif comportant, à chaque itération :

- une estimation (112) de distances entre lois de probabilité utilisant la divergence de Kullback Leibler, et
- le calcul (110), pour chaque classe, d'une loi de probabilité représentant son centre.

**3.** Procédé de configuration selon la revendication 2, dans lequel la répartition (106-114) comporte une initialisation (106, 108, 110) de l'algorithme itératif de K-Moyennes consistant à :

- trier (106) les lois de probabilité par ordre croissant de l'un des paramètres de ces lois,
- répartir (108) les lois de probabilité triées dans les classes dans cet ordre croissant, de la première à la dernière classe,
- pour chaque classe ainsi initialisée, déterminer (110) une loi de probabilité représentant son centre.

**4.** Procédé de configuration selon la revendication 3, dans lequel, chaque loi de probabilité étant une loi normale, le tri (106) des lois de probabilités lors de l'initialisation de l'algorithme itératif de K-Moyennes comporte le tri d'une composante d'espérance de ces lois normales.

**5.** Procédé de configuration selon l'une quelconque des revendications 2 à 4, dans lequel, chaque loi de probabilité étant une loi normale, la loi de probabilité représentant le centre d'une classe Ki est une loi normale déterminée par le calcul (110) de son espérance $\mu_i$ et de sa variance $\Sigma_i$ en fonction des espérances $\mu_{i,j}$ et des variances $\Sigma_{i,j}$ de toutes les lois de probabilité de cette classe Ki, de la façon suivante :

$$\mu_i = \frac{1}{Card(Ki)}\sum_{j \in Ki}\mu_{i,j} \text{ et } \Sigma_i = \frac{1}{Card(Ki)}\sum_{j \in Ki}\left(\Sigma_{i,j} + \mu_{i,j}^H \mu_{i,j}\right) - \mu_i^H \mu_i \text{ , où Card est la fonction «Cardi-}$$

nal» et H est l'opérateur Hermitien.

**6.** Procédé de configuration selon l'une quelconque des revendications 1 à 5, dans lequel la mise à jour (118) des paramètres du modèle statistique considéré (HMM-1, ..., HMM-N) comporte l'exécution de l'algorithme de Baum-Welch sur la séquence d'apprentissage (L-1, ..., L-N).

**7.** Procédé de configuration selon l'une quelconque des revendications 1 à 6, dans lequel l'initialisation préalable (104-116) des paramètres du modèle statistique considéré (HMM-1, ..., HMM-N) comporte en outre :

- l'initialisation des probabilités initiales de chaque état caché à une valeur commune d'équiprobabilité, et
- l'initialisation de la matrice des transitions de chaque état caché à chaque autre à une matrice dont les coefficients diagonaux sont égaux à une première valeur proche de 1, notamment comprise entre 0,8 et 1, et dont les autres coefficients sont égaux à une seconde valeur proche de 0, notamment comprise entre 0 et 0,2.

**8.** Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de configuration selon l'une quelconque des revendications 1 à 7, lorsque ledit programme est exécuté sur un ordinateur.

**9.** Dispositif adaptatif (10) de détection d'une situation parmi un ensemble de situations (S-1, ..., S-N) dans lesquelles est susceptible de se trouver un système physique (40) observé par au moins un capteur, à partir de données d'observation du système physique fournies par le capteur, comportant :

- au moins un capteur (18) pour la fourniture d'une séquence de données d'observation du système physique,
- des moyens de stockage (20), pour chaque situation (S-1, ..., S-N) de l'ensemble de situations, d'un modèle statistique de Markov à états cachés (HMM-1, ..., HMM-N),
- un calculateur (22), relié au capteur et aux moyens de stockage, programmé (28) pour sélectionner l'une des situations par comparaison de probabilités de ces situations connaissant la séquence de données d'observation, les probabilités étant estimées sur la base des modèles statistiques stockés,

dans lequel le calculateur est en outre programmé (32) pour exécuter les étapes d'un procédé de configuration selon l'une quelconque des revendications 1 à 7, sur réception d'une séquence identifiée comme séquence d'apprentissage correspondant à une situation déterminée du système physique.

10. Dispositif adaptatif (10) selon la revendication 9, dans lequel le capteur (18) comporte au moins l'un des éléments de l'ensemble constitué d'un capteur de mouvement à au moins un axe de mesure, d'un capteur de pression, d'un cardiomètre et d'un capteur de glycémie.

**Patentansprüche**

1. Verfahren zum Konfigurieren einer Vorrichtung (10) zum Erkennen einer Situation aus einer Reihe von Situationen (S-1, ..., S-N), in denen sich ein physisches System (40), welches von mindestens einem Sensor (18) überwacht wird, befinden kann, umfassend die folgenden Schritte:

   - Empfangen (102) einer als Lernsequenz (L-1, ..., L-N) bezeichneten Sequenz von Überwachungsdaten des physischen Systems, die vom Sensor geliefert wird und einer bestimmten Situation des physischen Systems entspricht,
   - Bestimmen, anhand der Lernsequenz, von Parametern eines statistischen Markov-Modells mit versteckten Zuständen (HMM-1, ..., HMM-N), das in Speichermitteln (20) der Erkennungsvorrichtung gespeichert ist und sich auf die bestimmte Situation bezieht, durch vorhergehendes Initialisieren (104-116) dieser Parameter und anschließend Aktualisieren (118) dieser initialisierten Parameter,

   **dadurch gekennzeichnet, dass** das vorhergehende Initialisieren (104-116) die folgenden Schritte umfasst:

   - wenn das betreffende statistische Modell eine gegebene Anzahl von versteckten Zuständen umfasst, Bestimmen (104, 106), anhand der Lernsequenz, einer Vielzahl von Wahrscheinlichkeitsgesetzen durch Teilen der Sequenz in Teilsequenzen und Zuweisen eines Wahrscheinlichkeitsgesetzes zu jeder Teilsequenz, welches dieselbe statistisch modelliert, wobei die Anzahl von Wahrscheinlichkeitsgesetzen, die bestimmt wurden, größer ist als die Anzahl von versteckten Zuständen des betreffenden statistischen Modells,
   - Verteilen (106-114) der bestimmten Wahrscheinlichkeitsgesetze zwischen den verschiedenen versteckten Zuständen des betreffenden statistischen Modells,
   - Bestimmen (110), für jeden versteckten Zustand des betreffenden statistischen Modells und anhand der diesem versteckten Zustand zugeordneten Wahrscheinlichkeitsgesetze, eines einzigen Wahrscheinlichkeitsgesetzes, welches diesen versteckten Zustand repräsentiert, und
   - Initialisieren (116) der Parameter des betreffenden statistischen Modells anhand der bestimmten repräsentativen Wahrscheinlichkeitsgesetze,

   und dadurch, dass das Verfahren weiter einen Schritt des Konfigurierens (122) der Erkennungsvorrichtung umfasst, damit das betreffende statistische Modell die durch das vorhergehende Initialisieren (104-116) und anschließend das Aktualisieren (118) bestimmten Parameter integriert.

2. Konfigurationsverfahren nach Anspruch 1, wobei das Verteilen (106-114) das Ausführen (110-114) eines iterativen K-Means-Algorithmus an einer Anzahl von Klassen umfasst, die gleich der Anzahl von versteckten Zuständen des betreffenden statistischen Modells (HMM-1, ..., HMM-N) ist, wobei dieser iterative Algorithmus bei jeder Iteration umfasst:

   - ein Schätzen (112) der Abstände zwischen Wahrscheinlichkeitsgesetzen unter Verwendung der Kullback-Leibler-Divergenz, und
   - das Berechnen (110), für jede Klasse, eines Wahrscheinlichkeitsgesetzes, welches sein Zentrum repräsentiert.

3. Konfigurationsverfahren nach Anspruch 2, wobei das Verteilen (106-114) ein Initialisieren (106, 108, 110) des iterativen K-Means-Algorithmus umfasst, das darin besteht:

   - die Wahrscheinlichkeitsgesetze in aufsteigender Reihenfolge eines der Parameter dieser Gesetze zu sortieren (106),
   - die sortierten Wahrscheinlichkeitsgesetze in dieser aufsteigenden Reihenfolge von der ersten bis zur letzten Klasse in den Klassen zu verteilen (108),
   - für jede so initialisierte Klasse ein Wahrscheinlichkeitsgesetz zu bestimmen (110), welches sein Zentrum repräsentiert.

**4.** Konfigurationsverfahren nach Anspruch 3, wobei, wenn jedes Wahrscheinlichkeitsgesetz eine Normalverteilung ist, das Sortieren (106) der Wahrscheinlichkeitsgesetze beim Initialisieren des iterativen K-Means-Algorithmus das Sortieren einer Erwartungskomponente dieser Normalverteilungen umfasst.

**5.** Konfigurationsverfahren nach einem der Ansprüche 2 bis 4, wobei, wenn jedes Wahrscheinlichkeitsgesetz eine Normalverteilung ist, das Wahrscheinlichkeitsgesetz, welches das Zentrum einer Klasse Ki repräsentiert, eine Normalverteilung ist, die durch die Berechnung (110) ihrer Erwartung $\mu_i$ und ihrer Varianz $\Sigma_i$ in Abhängigkeit von den Erwartungen $\mu_{i,j}$ und den Varianzen $\Sigma_{i,j}$ aller der Wahrscheinlichkeitsgesetze dieser Klasse Ki in der folgenden Weise bestimmt wird: $\mu_i = \dfrac{1}{Card(Ki)} \sum_{j \in Ki} \mu_{i,j}$ und $\Sigma_i = \dfrac{1}{Card(Ki)} \sum_{j \in Ki} \left( \Sigma_{i,j} + \mu_{i,j}^H \mu_{i,j} \right) - \mu_i^H \mu_i$, worin Card die "Kardinalfunktion" ist und H der Hermitesche Operator ist.

**6.** Konfigurationsverfahren nach einem der Ansprüche 1 bis 5, wobei das Aktualisieren (118) der Parameter des betreffenden statistischen Modells (HMM-1, ..., HMM-N) das Ausführen des Baum-Welch-Algorithmus an der Lernsequenz (L-1, ..., L-N) umfasst.

**7.** Konfigurationsverfahren nach einem der Ansprüche 1 bis 6, wobei das vorhergehende Initialisieren (104-116) der Parameter des betreffenden statistischen Modells (HMM-1, ..., HMM-N) weiter umfasst:

- Initialisieren der anfänglichen Wahrscheinlichkeiten jedes versteckten Zustands mit einem gemeinsamen Gleichwahrscheinlichkeitswert, und
- Initialisieren der Matrix der Übergänge von jedem versteckten Zustand zu jedem anderen mit einer Matrix, deren Diagonalkoeffizienten gleich einem ersten Wert nahe 1 sind, insbesondere im Bereich zwischen 0,8 und 1, und deren andere Koeffizienten gleich einem zweiten Wert nahe 0 sind, insbesondere im Bereich zwischen 0 und 0,2.

**8.** Computerprogramm, das aus einem Kommunikationsnetz herunterladbar und/oder auf einem über Computer lesbaren Träger gespeichert und/oder über einen Prozessor ausführbar ist, **dadurch gekennzeichnet, dass** es Anweisungen für das Ausführen der Schritte eines Konfigurationsverfahrens nach einem der Ansprüche 1 bis 7 umfasst, wenn das Programm auf einem Computer ausgeführt wird.

**9.** Adaptive Vorrichtung (10) zum Erkennen einer Situation aus einer Reihe von Situationen (S-1, ..., S-N), in denen sich ein von mindestens einem Sensor überwachtes physisches System (40) befinden kann, anhand von Überwachungsdaten des physischen Systems, welche von dem Sensor geliefert werden, umfassend:

- mindestens einen Sensor (18) für das Liefern einer Sequenz von Überwachungsdaten des physischen Systems,
- Mittel zum Speichern (20), für jede Situation (S-1, ..., S-N) aus der Reihe von Situationen, eines statistischen Markov-Modells mit versteckten Zuständen (HMM-1, ..., HMM-N),
- einen mit dem Sensor und mit den Speichermitteln verbundenen Rechner (22), der dafür programmiert (28) ist, eine der Situationen durch Vergleichen von Wahrscheinlichkeiten dieser Situationen unter Kenntnis der Sequenz von Überwachungsdaten auszuwählen, wobei die Wahrscheinlichkeiten auf der Basis der gespeicherten statistischen Modelle geschätzt werden,

wobei der Rechner weiter dafür programmiert (32) ist, auf Empfang einer Sequenz hin, die als einer bestimmten Situation des physischen Systems entsprechende Lernsequenz identifiziert wird, die Schritte eines Konfigurationsverfahrens nach einem der Ansprüche 1 bis 7 auszuführen.

**10.** Adaptive Vorrichtung (10) nach Anspruch 9, wobei der Sensor (18) mindestens eines der Elemente aus der Reihe bestehend aus einem Bewegungssensor mit mindestens einer Messachse, einem Drucksensor, einem Kardiometer und einem Blutzuckersensor umfasst.

**EP 2 423 851 B1**

**Claims**

1. A method of configuring a device (10) for detecting a situation from among a set of situations (S-1, ..., S-N) in which it is possible to find a physical system (40) observed by a least one sensor (18), comprising the following steps:

   - receiving (102) a sequence of observation data of the physical system, called a training sequence (L-1, ..., L-N), provided by the sensor and corresponding to a determined situation of the physical system,
   - determining, from the training sequence, the parameters of a statistical hidden Markov model (HMM-1, ..., HMM-N) recorded onto storage media (20) of the detection device and relating to the determined situation, by prior initializing (104-116) these parameters, then updating (118) these initialized parameters,

   **characterized in that** this prior initialization (104-116) comprises the following steps:

   - with the statistical model being used having a given number of hidden states, determining (104, 106) multiple probability distributions from the training sequence, by dividing the sequence into sub-sequences and assigning to each sub-sequence a probability distribution statistically modeling it, the number of determined probability distributions being greater than the number of hidden states in the statistical model being used,
   - distributing (106-114) said determined probability distributions between the hidden states of the statistical model being used,
   - determining (110), for each hidden state in the statistical model being used and, from the probability distributions assigned to said hidden state, a single probability distribution that is representative of said hidden state, and
   - initializing (116) the parameters of the statistical model being used from the determined representative probability distributions,

   and **in that** the method further includes a configuration step (122) for the detection device such that the statistical model being used includes the parameters determined by said prior initialization (104-116) and then said update (118).

2. The configuration method according to claim 1, wherein the distribution (106-114) comprises the execution (110-114) of an iterative K-Means algorithm on a number of classes equal to the number of hidden states in the statistical model being used (HMM-1, ..., HMM-N), this iterative algorithm comprising, at each iteration:

   - an estimate (112) of distances between probability distributions using the Kullback-Leibler divergence, and
   - the calculation (110), for each class, of a probability distribution representing its center.

3. The configuration method according to claim 2, wherein the distribution (106-114) comprises an initialization (106, 108, 110) of the iterative K-Means algorithm, consisting of:

   - sorting (106) the probability distributions in ascending order of one of the parameters of said distributions,
   - distributing (108) the sorted probability distributions into the classes in this ascending order, from the first to the last class,
   - for each class initialized in such a way, determining (110) a probability distribution that represents its center.

4. The configuration method according to claim 3, wherein, each probability distribution being a normal distribution, the sorting (106) of the probability distributions during the initialization of the iterative K-Means algorithm involves sorting an expectation component of said normal distributions.

5. The configuration method according to any one of claims 2 to 4, wherein, each probability distribution being a normal distribution, the probability distribution representing the center of a class Ki is a normal distribution determined by the calculation (110) of its expectation $\mu_i$ and its variance $\Sigma_i$ based on the expectations $\mu_{i,j}$ and variances $\Sigma_{i,j}$ of all probability distributions of this class Ki, as follows: $\mu_i = \dfrac{1}{Card(Ki)} \sum_{j \in Ki} \mu_{i,j}$ and

   $\Sigma_i = \dfrac{1}{Card(Ki)} \sum_{j \in Ki} \left( \Sigma_{i,j} + \mu_{i,j}^H \mu_{i,j} \right) - \mu_i^H \mu_i$ , where Card is the "Cardinal" function and H is the Hermitian operator.

14

6. The configuration method according to any one of claims 1 to 5, wherein the update (118) of the parameters of the statistical model being used (HMM-1, ..., HMM-N) includes the execution of the Baum-Welch algorithm on the training sequence (L-1, ..., L-N).

7. The configuration method according to any one of claims 1 to 6, wherein the prior initialization (104-116) of the parameters of the statistical model being used (HMM-1, ..., HMM-N) also comprises:

- the initialization of the initial probabilities of each hidden state at a common value of equiprobability, and
- the initialization of the matrix of transitions from each hidden state to each other at a matrix whose diagonal coefficients are equal to a first near value of 1, specifically between 0.8 and 1, and whose other coefficients are equal to a second near value of 0, specifically between 0 and 0.2.

8. A computer program that can be downloaded from a communication network and/or saved on a computer-readable medium and/or executed by a processor, **characterized in that** it comprises instructions for executing the steps of a configuration method according to any one of claims 1 to 7, when said program is executed on a computer.

9. An adaptive device (10) for detecting a situation from among a set of situations (S-1, ..., S-N) in which it is possible to find a physical system (40) observed by at least one sensor, from observation data of the physical system provided by the sensor, comprising:

- at least one sensor (18) for providing a sequence of observation data of the physical system,
- means of storage (20), for each situation (S-1, ..., S-N) in the set of situations, of a statistical hidden Markov model (HMM-1, ..., HMM-N),
- a computer (22), connected to the sensor and to the storage means, programmed (28) to select one of the situations by comparing probabilities of these situations knowing the observation data sequence, the probabilities being estimated based on stored statistical models,

wherein the computer is further programmed (32) to execute the steps of a configuration method according to any one of claims 1 to 7, upon receiving a sequence identified as a training sequence corresponding to a determined situation of the physical system.

10. The adaptive device (10) according to claim 9, wherein the sensor (18) includes at least one of the elements of the set comprised of a movement sensor with at least one measurement axis, a pressure sensor, a heart rate monitor, and a glucose sensor.

## Figure 1

10

-18-

-22-

-24-

26

-28- -30- -32-

-20-

S-1 | HMM-1 | L-1

. . .

S-N | HMM-N | L-N

-34-

-36-

-38-

-12- -14- -16-

## Figure 2

40

10 42

44

## Figure 3

```
        ┌──────────┐
        │   100    │
        └──────────┘
              │
              ▼
        ┌──────────┐
        │   102    │
        └──────────┘
              │
              ▼
        ┌──────────┐
        │   104    │
        └──────────┘
              │
              ▼
        ┌──────────┐
        │   106    │
        └──────────┘
              │
              ▼
        ┌──────────┐
    ───▶│   108    │
    │   └──────────┘
    │         │
    │         ▼
    │   ┌──────────┐
    │   │   110    │◀───┐
    │   └──────────┘    │
    │         │         │
    │         ▼         │
    │   ┌──────────┐    │
    │   │   112    │    │
    │   └──────────┘    │
    │         │         │
    │         ▼         │
    │     ◇ 114 ◇ ──────┘
    │         │
    │         ▼
    │   ┌──────────┐
    │   │   116    │
    │   └──────────┘
    │         │
    │         ▼
    │   ┌──────────┐
    │   │   118    │
    │   └──────────┘
    │         │
    │         ▼
    └──── ◇ 120 ◇
              │
              ▼
        ┌──────────┐
        │   122    │
        └──────────┘
```

Figure 4A

Figure 4B

Figure 4C

Figure 4D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. JALLON et al.** Détection system of motor epileptic seizures through motion analysis with 3d accelerometers. *conférence IEEE EMBC,* 2009
- **L. RABINER.** A tutorial on Hidden Markov Models and selected applications in speech récognition. *Proceedings of the IEEE,* Février 1989, vol. 77 (2), 257-286

- **K. NATHAN et al.** Initialization of hidden Markov models for unconstrained on-line handwriting récognition. *conférence ICASSP,* 1996
- **P. SMYTH.** Clustering sequences with hidden markov models. *Advances in Neural Information Processing Systems,* 1996